# FASCICULE DE BREVET EUROPEEN

(11) **EP 1 199 160 B1**
(45) Date de publication et mention de la délivrance du brevet: **24.02.2010**
(21) Numéro de dépôt: 01460064.7
(22) Date de dépôt: 16.10.2001
(51) Int. Cl.: B32B 27/08, B60J 1/20

(54) **Rideau de store pour véhicule**
Rolloanordnung für Fahrzeuge
Roller blind for vehicle

(30) Priorité: 16.10.2000 FR 0013248
(43) Date de publication de la demande: 24.04.2002
(73) Titulaire: Wagon SAS, 79300 Bressuire (FR)
(72) Inventeur: Jincheleau, Michel, 79320 Moncoutant (FR)
(74) Mandataire: Vidon, Patrice

(56) Documents cités:
- EP-A- 0 715 980
- DE-A- 3 823 780
- US-A- 4 335 773
- US-A- 4 848 437
- US-A- 5 176 774
- DATABASE WPI Section Ch, Week 199841 Derwent Publications Ltd., London, GB; Class A14, AN 1998-475688 XP002169926 & JP 10 202800 A (HIRAOKA SHOKUSEN KK), 4 août 1998 (1998-08-04)

## Description

Le domaine de l'invention est celui des véhicules automobiles, et notamment des véhicules présentant une surface vitrée importante, en particulier au niveau du pavillon. Plus précisément, l'invention concerne l'occultation de telles surfaces vitrées, notamment pour se protéger des rayons du soleil. Plus précisément encore, l'invention concerne les rideaux d'occultation, en particulier pour la protection contre les rayons du soleil, destinée à être utilisée dans un véhicule automobile, notamment au niveau du pavillon.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la forme de deux ou trois éléments, dont certains peuvent former toits ouvrants.

De la même façon, des surfaces vitrées importantes peuvent être prévues sur d'autres parties du véhicule, et par exemple à l'arrière, notamment lorsque le véhicule est équipé d'un hayon.

On comprend aisément qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour occulter une surface vitrée, on connaît une technique décrite dans les documents US 4 848 437 et US 5 176 444 d'écran pare-soleil dont la composition lui confère une tendance à s'enrouler automatiquement lorsqu'il est relâché à partir d'une position déployée. Plus précisément, l'écran selon cette technique comprend deux feuilles d'un matériau plastique solidarisées ensembles dans des états d'étirement différents et entre lesquelles peut être intercalé une feuille de matériau réfléchissant.

On connaît également une technique de store pare-soleil multicouche permettant de réduire le rayonnement incident du soleil, tout en conservant une certaine transparence vers l'extérieur. le rideau d'un tel store comprend une première couche en plastique sur laquelle sont solidarisées les autres couches, une couche intermédiaire discontinue, et une couche absorbante pour lutter contre le rayonnement ultra-violet.

Pour les surfaces vitrées réduites, et verticales ou sensiblement verticales, telles que les vitres arrières ou latérales du véhicule, on connaît également le stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement incurvée, tels que le sont par exemple les pavillons de véhicules actuels ou futurs.

En effet, si l'on développait horizontalement un store dont les dimensions pourraient être approximativement de 2 m en longueur, et de 1,5 m en largeur, pour occulter un pavillon vitré, la toile "pocherait", c'est-à-dire que ses bords latéraux se rapprocheraient légèrement l'un de l'autre, ce qui provoquerait un creux au centre la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, pour une personne placée à l'intérieur du véhicule ou de l'habitation, l'apparence du store est le plus souvent noire (ou sombre), et donc peu attrayant d'un point de vue esthétique.

Or, d'une façon générale, et plus encore pour les véhicules automobiles haut de gamme, l'aspect intérieur du véhicule s'avère souvent déterminant pour la perception de confort, et peut être, en conséquence, un critère de choix au moment de l'achat.

On connaît également une technique de rideau de store imprimé sur au moins une face, décrite dans le document US-A-5443563, comprenant quatre couches successives : une première couche de revêtement en PVC, une couche de tissu de fibre de verre, une couche en matériau opaque et une deuxième couche de revêtement en PVC.

De la même façon, l'aspect trop souple d'une toile classique, par exemple au toucher, serait pris comme un signe de mauvaise qualité apparente, et nuirait à l'appréciation du véhicule.

L'invention a notamment pour objectif de pallier ces différents inconvénients de l'état de la technique.

Plus précisément un objectif de l'invention est de proposer un rideau de store de protection notamment contre les effets du soleil (rayonnements ultraviolets en particulier), et un store correspondant, qui s'harmonise tant sur le plan des couleurs que des textures avec son environnement, tout en présentant une bonne tenue mécanique, que ce soit pour son aspect (planéité) en position déployée, ou pour sa résistance mécanique aux opérations successives d'enroulement et de déroulement, ainsi qu'aux déformations intempestives.

Un autre objectif de l'invention est de fournir un tel rideau qui soit peu coûteux et facile à mettre en oeuvre sur différents types de stores à enrouleur. L'invention a ainsi pour objectif, également, de fournir des procédés de fabrication d'un tel rideau.

Ces objectifs, ainsi que d'autres qui apparaîtront par la suite, sont atteints à l'aide d'un rideau de store, destiné notamment à équiper un véhicule, formé d'un empilement d'au moins trois couches, dont :
- une couche assortie au revêtement intérieur dudit véhicule ;
- une couche de rigidification ;
- une couche opacifiante, destinée à empêcher ou limiter le passage de la lumière.

On obtient ainsi un moyen d'occultation dont le côté apparent de l'intérieur du véhicule peut être assorti au revêtement du reste du véhicule, tout en présentant des propriétés mécaniques et/ou de protection contre les ultraviolets appropriées.

De façon avantageuse, le rideau comprend en outre, une couche de neutralisation ou d'atténuation de la modification de l'aspect et/ou de la couleur de ladite couche assortie au revêtement induite par ledit matériau opacifiant.

On peut, grâce à cette disposition, compenser l'effet de la couleur de la couche opacifiante susceptible de transparaître au travers des deux autres couches. Cette caractéristique est particulièrement utile lorsque la couche assortie au revêtement et la couche opacifiante ont des couleurs très différente (l'une étant sombre et l'autre claire, ou inversement).

Préférentiellement, ladite couche assortie au revêtement est réalisée dans un matériau tissé gratté, tel que du jersey. Ce matériau est couramment utilisé comme revêtement intérieur dans les véhicules. Il est, bien entendu, que d'autres matières similaires peuvent être envisagées, toujours dans le but de s'accorder au mieux avec le revêtement déjà utilisé dans le véhicule.

Selon un premier mode de réalisation avantageux, ladite couche de rigidification forme une grille. Cette grille peut être par exemple métallique ou en tout autre matériau présentant des propriétés mécaniques adaptées.

Selon un second mode de réalisation avantageux, ladite couche de rigidification comprend un film de fibres de verre.

Préférentiellement, ledit film de fibres de verre est intercalé entre ladite couche de neutralisation et ladite couche assortie au revêtement.

Le film de fibres de verre pourra être préféré à une grille, lorsque l'épaisseur ou le relief de cette dernière risque d'apparaître au travers de la couche assortie au revêtement, en particulier lorsque cette dernière est relativement fine.

Selon un aspect avantageux de l'invention, ladite couche de rigidification comprend un film polyester.

Dans ce cas, ladite couche opacifiante et ladite couche de neutralisation sont intercalées entre ledit film polyester et ladite couche assortie au revêtement. Ce type d'empilement est notamment intéressant au moment de l'assemblage des couche. En effet, on peut solidariser les différentes couches en une seule opération, par thermo-fusion.

Selon une variante avantageuse, on prévoit que le film polyester soit intercalé entre les couches opacifiante et de neutralisation d'une part, et la couche assortie au revêtement d'autre part.

Avantageusement, ladite couche opacifiante comprend un film polyuréthane.

Préférentiellement, ladite couche opacifiante présente une couleur sombre, de préférence noire, qui offre un bon pouvoir opacifiant combiné à une bonne tenue en température avec ce type de couleur.

Selon une autre caractéristique avantageuse, ladite couche de neutralisation présente une couleur claire, de préférence blanche. Cette couleur neutralise, au moins en partie, les effets de la couleur sombre de la couche opacifiante susceptibles d'être visible de l'intérieur du véhicule, ou d'assombrir la couche visible. Toutefois, en fonction des couleurs de la couche assortie au revêtement d'une part, de la couche opacifiante d'autre part, d'autres couleurs peuvent être choisies pour la couche de neutralisation.

Selon un mode de réalisation particulier, ladite couche opacifiante comprend au moins un élément réfléchissant, par exemple en aluminium, de façon à renvoyer les rayons du soleil.

De façon avantageuse, ladite couche de neutralisation comprend un film polyuréthane. On peut ainsi envisager fabriquer les couches opacifiante et de neutralisation simultanément, par co-extrusion.

L'invention concerne également le procédé de fabrication d'un rideau tel que décrit ci-dessus.

Selon un premier mode de mise en oeuvre, ce procédé comprend les étapes suivantes :
- co-extrusion de deux films opacifiant et neutralisant ;
- fixation par collage de ladite couche assortie au revêtement avec ladite couche de rigidification ;
- fixation par thermo-fusion desdits films sur ladite couche de rigidification, le film opacifiant étant placé de façon qu'il reste apparent.

Selon un autre mode de réalisation avantageux, le procédé de fabrication comprend les étapes suivantes :
- co-extrusion de deux films opacifiant et neutralisant ;
- fixation par thermo-fusion desdits films avec ladite ladite couche assortie au revêtement d'une part et avec un film polyester d'autre part, lesdits films opacifiant et neutralisant étant intercalés entre ladite couche assortie au revêtement et ledit film polyester de façon que ce dernier soit en contact avec ledit film opacifiant.

L'invention concerne également un store comprenant au moins un rideau tel que précédemment décrit.

Un tel store peut avantageusement être destiné à couvrir, au moins partiellement, la surface d'un pavillon d'un véhicule.

D'autres caractéristiques et avantages de l'invention apparaîtront plus clairement à la lecture de la description suivante de trois modes de réalisation préférentiels de l'invention, donnés à titre d'exemple illustratif et non limitatif, et des dessins parmi lesquels :
- la figure 1 illustre un premier mode de réalisation d'un rideau de store selon l'invention ;
- la figure 2 illustre un deuxième mode de réalisation d'un rideau de store selon l'invention ;
- la figure 3 illustre un troisième mode de réalisation d'un rideau de store selon l'invention.

Le principe de l'invention repose donc sur la mise en oeuvre d'un rideau stratifié dont la partie visible de l'intérieur d'un pavillon de véhicule rappelle la ou les couleurs ainsi que la texture de l'environnement d'un store.

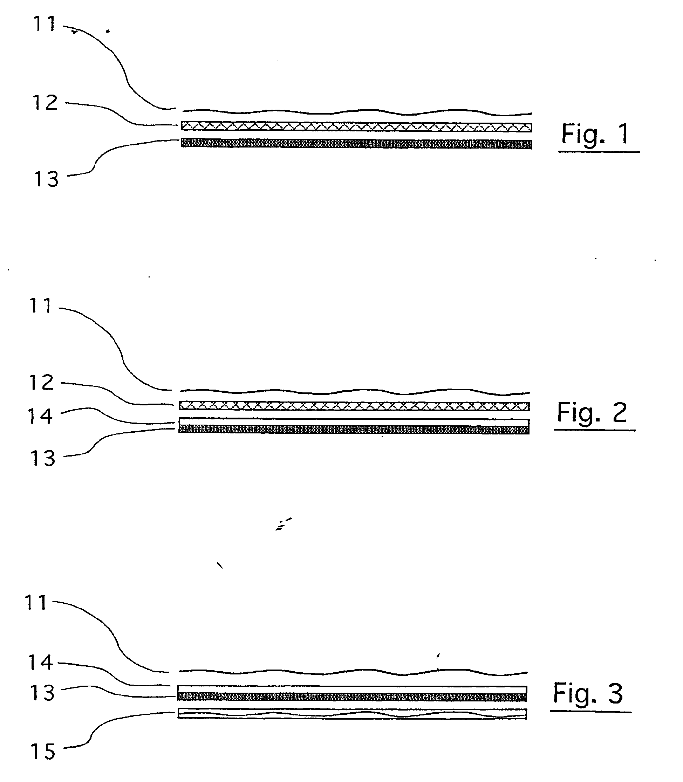

Dans le premier mode de réalisation représenté sur la figure 1, la première couche 11 est un film dont la couleur et la texture rappellent les revêtements intérieurs d'un véhicule, dont le pavillon est au moins partiellement en verre ou en un matériau similaire, transparent ou translucide.

Cette première couche de décoration 11 est avantageusement un tissu gratté, en particulier du jersey, couramment utilisé pour la décoration des voitures, et notamment du pavillon.

Le jersey présente l'avantage de fournir une présentation homogène avec le revêtement du reste de l'habitacle. Cependant, il s'agit d'un tissu relativement fin et souple. En conséquence, il présente les inconvénients de :
- ne procurer qu'un très faible pouvoir occultant ;
- présenter des propriétés mécaniques inappropriées (souplesse et élasticité, en particulier dans le sens de la trame) pour se maintenir de façon autonome selon une configuration plane en position déployée (à terme, les bords d'une telle toile s'incurvent de façon particulièrement inesthétique), ainsi que pour résister à des enroulements/déroulements successifs et à des déformations intempestives.

Selon l'invention, la première couche 11 est donc associée à une deuxième couche 12 de rigidification et à une couche 13 d'opacification.

Selon ce premier mode de réalisation, la couche 12 est un film de fibres de verre, qui présente la propriété avantageuse de ne pas engendrer de déformations sur la surface visible de la première couche 11 lorsqu'il est appliqué sur celle-ci.

Les fibres de verre permettent en outre une solidarisation aisée par collage des couches 11 et 12, du fait qu'elle forme une trame, laissant des ouvertures entre les deux couches.

La couche 13 est, dans le mode de réalisation décrit, un film polyuréthane, présentant une couleur sombre, de préférence noire, lui conférant un pouvoir occultant à l'encontre des rayons du soleil.

Le film polyuréthane est solidarisé au film de fibres de verre par collage. D'autres techniques de solidarisation peuvent toutefois être envisagées, telles que notamment le thermocollage, la thermo-fusion, le soudage, la couture, la fixation mécanique,...sans sortir du cadre de l'invention.

Selon un autre mode de réalisation, la couche 13 peut aussi être une grille, par exemple métallique. Du fait des déformations que cela peut engendre sur le côté visible de la couche de décoration 11, ce type de grille sera plutôt utilisé en combinaison avec une couche de décoration assez épaisse, et notamment ne laissant pas apparaître la maille de la grille.

Un procédé de fabrication d'un rideau stratifié tel que précédemment décrit peut consister à encoller, sous forme de couches uniformes ou par dépose de points de colle régulièrement répartis, les deux faces du film de fibres de verre, et à presser les couches 11, 12, 13 (la couche 12 étant intercalée entre les deux autres couches), par exemple à l'aide d'un laminoir.

Dans certains cas, et en particulier quand le revêtement de décoration utilisé pour la couche 11 présente une couleur claire, la couleur du matériau opacifiant peut apparaître par transparence au travers du revêtement de décoration. On constate alors une différence de ton entre la couche de décoration 11 et le revêtement du reste du pavillon, même si les deux matières sont initialement identiques.

Les deuxième et troisième modes de réalisation ont notamment pour objectif de remédier à cette situation.

Dans le deuxième mode de réalisation, les couches 11, 12 et 13 sont à nouveau présentes, de façon similaire au premier mode de réalisation.

Une quatrième couche 14 est intercalée entre la couche opacifiante 13 et la couche de rigidification 12. Cette couche 14 a pour but de neutraliser l'effet visible de la couleur sombre de la couche 13 apparaissant par transparence au travers des couches 11 et 12.

Aussi, dans l'hypothèse selon laquelle la couche 11 est de couleur claire et la couche opacifiante de couleur foncée, on choisit une couche 14 de couleur claire, par exemple blanche.

D'autres coloris sont bien entendu envisageables pour la couche 14, et notamment celui de la couche 11 elle-même. Toutefois, pour des raisons économiques, on a de préférence recours à une couche 14 de couleur blanche (qui procure le résultat recherché pour l'ensemble des couleurs claires susceptibles de composer la couche 11) afin de ne pas être contraint de décliner la couche 14 en autant de références qu'il y a de coloris pour la couche 11.

Par ailleurs, les couleurs peuvent être inversées pour un même effet recherché. En d'autres termes, il est possible que la couche 14 soit choisie de couleur sombre, dans le cas où la couche 11 serait sombre et que le matériau opacifiant serait clair (ou réfléchissant).

Dans le mode de réalisation décrit, la couche 14 est en polyuréthane, ce qui permet, lors de la fabrication, de co-extruder la couche de matériau opacifiante 13, aussi en polyuréthane, et la couche 14. D'autres matériaux peuvent bien sûr être utilisés.

Ainsi, pour la fabrication du tissu pour rideau de store selon ce deuxième mode de réalisation, on procède à :
- une co-extrusion de films polyuréthane constituant les couches 13 et 14;
- l'encollage de la couche de rigidification sur sa face destinée à être appliquée sur la couche de décoration 11 ;
- au collage de la couche de rigidification 12 et de la couche de décoration 11 ;
- à la solidarisation par thermo-fusion de la couche 14 avec la couche de rigidification 12.

La couche 14 présente avantageusement un point de fusion inférieur à celui de la couche de matériau opacifiant 13, ce qui rend le choix d'une solidarisation par thermo-fusion particulièrement opérant.

Les couches sont pressées entre elles à l'aide d'un laminoir, dont au moins un des rouleaux peut procurer l'élévation de température nécessaire à la thermo-fusion.

La co-extrusion des couches 13 et 14 peut être réalisée au fur et à mesure du déroulement des deux autres couches en regard du laminoir.

Selon un troisième mode de réalisation, la couche de matériau de rigidification 15 est un film polyester.

Dans ce cas, le matériau de rigidification est placé côté vitre, les films polyuréthane 13 et 14 (similaires au second mode de réalisation) étant intercalés entre la couche de décoration 11 et le matériau de rigidification en polyester, de telle sorte que la couche opacifiante soit placée en regard du film polyester.

Selon une variante de ce mode de réalisation, le film polyester est intercalé entre le film de décoration et les films polyuréthane.

Pour la fabrication du tissu selon ce troisième mode de réalisation, on procède à :
- une co-extrusion des films polyuréthane constituant les couches 13 et 14;
- à la solidarisation par thermo-fusion de la couche de décoration 11 sur la couche 14 ;
- à la solidarisation par thermo-fusion de la couche opacifiante 13 sur la couche de rigidification 15.

Les deux dernières étapes sont réalisées simultanément, à l'aide par exemple d'un laminoir intégrant des moyens de chauffage permettant d'atteindre les points de fusion des couches 13 et 14.

Ainsi, selon l'invention qui vient d'être décrite, on propose de nouvelles solutions pour la fabrication de rideaux de store, notamment de pavillon, présentant de bonnes qualités de structure, d'efficacité contre les effets du soleil, tout en améliorant les aspects décoratifs des rideaux, jusqu'ici le plus souvent de couleur noire.

Les matériaux mentionnés sont cités à titre d'exemple, d'autres matières ayant des propriétés proches ou similaires pouvant être envisagées sans sortir du cadre de l'invention. Les procédés de fabrication sont également donnés à titre de simples exemples.

Par ailleurs, d'autres couches peuvent être prévues dans la composition, pour renforcer tel ou tel aspect. Par exemple, on peut prévoir, sur la face tournée vers l'extérieur, un film réfléchissant, en aluminium ou en un matériau similaire.

## Revendications

1. Rideau de store, destiné notamment à équiper un véhicule, **caractérisé en ce qu'**il est formé d'un empilement d'au moins quatre couches disposées dans l'ordre suivant :
□ une couche (11) destinée à constituer une couche de décoration de l'intérieur du véhicule ;
□ une couche de rigidification (12, 15), destinée à augmenter la résistance du rideau aux opérations successives d'enroulement et de déroulement, ainsi qu'aux déformations intempestives ;
□ une couche (14) dont la couleur permet de neutraliser ou d'atténuer l'effet de la couleur de la couche opacifiante (13) sur la couleur de la couche de décoration (11) ;
□ une couche opacifiante (13), destinée à empêcher ou limiter le passage de la lumière.

2. Rideau selon la revendication 1, **caractérisé en ce que** ladite couche (11) de décoration est réalisée dans un matériau tissé gratté, tel que du jersey.

3. Rideau selon l'une quelconque des revendications 1 et 2, **caractérisé en ce que** ladite couche de rigidification (12) forme une grille.

4. Rideau selon l'une quelconque des revendications 1 et 2, **caractérisé en ce que** ladite couche de rigidification (12) comprend un film de fibres de verre.

5. Rideau selon l'une quelconque des revendications 1 et 2, **caractérisé en ce que** ladite couche de rigidification (15) comprend un film polyester.

6. Rideau selon l'une quelconque des revendications 1 à 5, **caractérisé en ce que** ladite couche opacifiante (13) comprend un film polyuréthane.

7. Rideau selon l'une quelconque des revendications 1 à 6, **caractérisé en ce que** ladite couche opacifiante (13) présente une couleur sombre, de préférence noire.

8. Rideau selon l'une quelconque des revendications 1 à 7, **caractérisé en ce que** ladite couche de neutralisation (14) présente une couleur claire, de préférence blanche.

9. Rideau selon l'une quelconque des revendications 1 à 8, **caractérisé en ce que** ladite couche opacifiante (13) comprend au moins un élément réfléchissant.

10. Rideau selon l'une quelconque des revendications 1 à 9, **caractérisé en ce que** ladite couche de neutralisation (14) comprend un film polyuréthane.

11. Procédé de fabrication d'un rideau de store, destiné notamment à équiper un véhicule, et formé d'un empilement d'au moins quatre couches disposées dans l'ordre suivant :
□ une couche (11) destinée à constituer une couche de décoration de l'intérieur du véhicule;
□ une couche de rigidification (12, 15), destinée à augmenter la résistance du rideau aux opérations successives d'enroulement et de déroulement, ainsi qu'aux déformations intempestives ;
□ une couche dont la couleur permet de neutraliser ou d'atténuer l'effet de la couleur de la couche d'opacifiante sur la couleur de la couche de décoration ;
□ une couche opacifiante (13), destinée à empêcher ou limiter le passage de la lumière.
**caractérisé en ce qu'**il comprend les étapes suivantes :
□ co-extrusion de deux films opacifiant (13) et neutralisant (14) ;
□ fixation par collage de ladite couche de décoration avec ladite couche de rigidification (12) ;
□ fixation par thermo-fusion desdits films (13), (14) sur ladite couche de rigidification (12), le film opacifiant (13) étant placé de façon qu'il reste apparent.

12. Store comprenant au moins un rideau réalisé selon l'une quelconque des revendications 1 à 10.

13. Store selon la revendication 12, **caractérisé en ce qu'**il est destiné à couvrir, au moins partiellement, la surface d'un pavillon d'un véhicule.

## Claims

1. Roller blind, intended in particular for equipping a vehicle, **characterised in that** it is formed by a stack of at least four layers, arranged in the following order:
□ a layer (11) which is intended to constitute a decorative layer for the interior of the vehicle;
□ a reinforcement layer (12, 15) which is intended to increase the resistance of the blind to successive winding and unwinding operations, and to untimely deformations;
□ a layer (14) whose colour allows the effect of the colour of the blocking layer (13) on the colour of the decorative layer (11) to be neutralised or attenuated;
□ a blocking layer (13) which is intended to prevent or limit the passage of light.

2. Blind according to claim 1, **characterised in that** the decorative layer (11) is produced from a brushed woven material, such as jersey.

3. Blind according to either claim 1 or claim 2, **characterised in that** the reinforcement layer (12) forms a grid.

4. Blind according to either claim 1 or 2, **characterised in that** the reinforcement layer (12) comprises a film of glass fibres.

5. Blind according to either claim 1 or claim 2, **characterised in that** the reinforcement layer (15) comprises a polyester film.

6. Blind according to any one of claims 1 to 5, **characterised in that** the blocking layer (13) comprises a polyurethane film.

7. Blind according to any one of claims 1 to 6, **characterised in that** the blocking layer (13) is of a dark colour, preferably black.

8. Blind according to any one of claims 1 to 7, **characterised in that** the neutralisation layer (14) is of a light colour, preferably white.

9. Blind according to any one of claims 1 to 8, **characterised in that** the blocking layer (13) comprises at least one reflective element.

10. Blind according to any one of claims 1 to 9, **characterised in that** the neutralisation layer (14) comprises a polyurethane film.

11. Method for producing a roller blind, which is intended in particular for equipping a vehicle and which is formed by a stack of at least four layers arranged in the following order:
□ a layer (11) which is intended to constitute a decorative layer for the interior of the vehicle;
□ a reinforcement layer (12, 15) which is intended to increase the resistance of the blind to successive winding and unwinding operations, and to untimely deformations;
□ a layer whose colour allows the effect of the colour of the blocking layer on the colour of the decorative layer to be neutralised or attenuated;
□ a blocking layer (13) which is intended to prevent or limit the passage of light,
**characterised in that** the method comprises the following steps:
□ co-extrusion of two films, a blocking film (13) and a neutralising film (14);
□ fixing the decorative layer to the reinforcement layer (12) by means of adhesive-bonding;
□ fixing the films (13), (14) to the reinforcement layer (12) by means of thermo-fusion, the blocking film (13) being positioned in such a manner that it remains visible.

12. Shade comprising at least one blind produced according to any one of claims 1 to 10.

13. Shade according to claim 12, **characterised in that** it is intended to cover, at least partially, the surface of a roof of a vehicle.

## Patentansprüche

1. Rollobahn, welche insbesondere dazu bestimmt ist, ein Fahrzeug auszurüsten, **dadurch gekennzeichnet, dass** die Rollobahn aus einem Stapel aus mindestens vier in der folgenden Reihenfolge angeordneten Lagen gebildet ist:
- einer Lage (11), welche dazu bestimmt ist, eine Dekorationslage des Innenraums des Fahrzeugs zu bilden;
- einer Versteifungslage (12, 15), welche dazu bestimmt ist, die Beständigkeit der Bahn gegenüber den aufeinanderfolgenden Betriebsarten des Aufrollens und des Abrollens sowie gegenüber ungewollten Verformungen zu erhöhen;
- einer Lage (14), deren Farbton es ermöglicht, eine Wirkung des Farbtons der verdunkelnden Lage (13) auf den Farbton der Dekorationslage (11) zu neutralisieren oder abzuschwächen;
- einer verdunkelnden Lage (13), die dazu bestimmt ist, den Lichtdurchlass zu verhindern oder zu begrenzen.

2. Bahn nach Anspruch 1, **dadurch gekennzeichnet, dass** die Dekorationslage (11) in einem gewebten angerauten Material wie Jersey ausgeführt ist.

3. Bahn nach einem der Ansprüche 1 und 2, **dadurch gekennzeichnet, dass** die Versteifungslage (12) ein Gitter bildet.

4. Bahn nach einem der Ansprüche 1 und 2, **dadurch gekennzeichnet, dass** die Versteifungslage (12) eine Glasfaser-Folie umfasst.

5. Bahn nach einem der Ansprüche 1 und 2, **dadurch gekennzeichnet, dass** die Versteifungslage (15) eine Polyester-Folie umfasst.

6. Bahn nach einem der Ansprüche 1 bis 5, **dadurch gekennzeichnet, dass** die verdunkelnde Lage (13) eine Polyurethan-Folie umfasst.

7. Bahn nach einem der Ansprüche 1 bis 6, **dadurch gekennzeichnet, dass** die verdunkelnde Lage (13) einen dunklen, vorzugsweise schwarzen Farbton aufweist.

8. Bahn nach einem der Ansprüche 1 bis 7, **dadurch gekennzeichnet, dass** die Neutralisierungslage (14) einen hellen, vorzugsweise weißen Farbton aufweist.

9. Bahn nach einem der Ansprüche 1 bis 8, **dadurch gekennzeichnet, dass** die verdunkelnde Lage (13) mindestens ein reflektierendes Element umfasst.

10. Bahn nach einem der Ansprüche 1 bis 9, **dadurch gekennzeichnet, dass** die Neutralisierungslage (14) eine Polyurethan-Folie umfasst.

11. Verfahren zur Herstellung einer Rollobahn, welche insbesondere dazu bestimmt ist, ein Fahrzeug auszurüsten, und welche aus einem Stapel von mindestens vier in der folgenden Reihenfolge angeordneten Lagen gebildet ist:
- einer Lage (11), welche dazu bestimmt ist, eine Dekorationslage des Innenraums des Fahrzeugs zu bilden;
- einer Versteifungslage (12, 15), welche dazu bestimmt ist, die Beständigkeit der Bahn gegenüber den aufeinanderfolgenden Betriebsarten des Aufrollens und des Abrollens sowie gegenüber ungewollten Verformungen zu erhöhen;
- einer Lage, deren Farbton es ermöglicht, eine Wirkung des Farbtons der verdunkelnden Lage auf den Farbton der Dekorationslage zu neutralisieren oder abzuschwächen;
- einer verdunkelnden Lage (13), die dazu bestimmt ist, den Durchlass des Lichts zu verhindern oder zu begrenzen,
**dadurch gekennzeichnet, dass** das Verfahren die folgenden Schritte umfasst:
- Koextrusion von einer verdunkelnden (13) und einer neutralisierenden (14) Folie;
- Befestigen der Dekorationslage mit der Versteifungslage (12) mittels Klebung;
- Befestigen der Folien (13), (14) auf der Versteifungslage (12) mittels Thermofusion, wobei die verdunkelnde Folie (13) derart angeordnet ist, dass sie sichtbar bleibt.

12. Rollo mit mindestens einer nach einem der Ansprüche 1 bis 10 ausgeführten Bahn.

13. Rollo nach Anspruch 12, **dadurch gekennzeichnet, dass** das Rollo dazu bestimmt ist, zumindest teilweise die Oberfläche eines Dachs eines Fahrzeugs abzudecken.
